(19) Europäisches Patentamt
European Patent Office
Office européen des brevets

(11) **EP 4 478 799 A1**

(12) **EUROPEAN PATENT APPLICATION**
published in accordance with Art. 153(4) EPC

(43) Date of publication:
**18.12.2024 Bulletin 2024/51**

(51) International Patent Classification (IPC):
*H04W 64/00* (2009.01)

(21) Application number: 23752435.0

(22) Date of filing: **10.02.2023**

(52) Cooperative Patent Classification (CPC):
**G01S 5/02; H04L 41/16; H04W 24/06; H04W 64/00**

(86) International application number:
**PCT/CN2023/075442**

(87) International publication number:
**WO 2023/151657 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.02.2022 CN 202210126490**

(71) Applicant: VIVO MOBILE COMMUNICATION CO., LTD.
**Dongguan, Guangdong 523863 (CN)**

(72) Inventors:
• **WANG, Yuanyuan**
  **Dongguan, Guangdong 523863 (CN)**
• **SUN, Peng**
  **Dongguan, Guangdong 523863 (CN)**
• **JIA, Chenglu**
  **Dongguan, Guangdong 523863 (CN)**

(74) Representative: **Murgitroyd & Company**
**165-169 Scotland Street**
**Glasgow G5 8PL (GB)**

(54) **INFORMATION PROCESSING METHOD AND COMMUNICATION DEVICE**

(57) This application discloses an information processing method and a communication device, and pertains to the field of communication technologies. The information processing method in embodiments of this application includes: obtaining, by a communication device, first information related to configuration information of a target AI model, where the first information includes measurement-related information and/or at least one candidate data processing policy; and determining, by the communication device, input data of the target AI model or a target data processing policy based on the measurement-related information and/or each candidate data processing policy; where the target data processing policy is used to indicate a preprocessing policy for the measurement-related information or a preprocessing policy for the input data of the target AI model.

A communication device obtains first information related to configuration information of a target AI model, where the first information includes measurement-related information and/or at least one candidate data processing policy — 201

The communication device determines input data of the target AI model or a target data processing policy based on the measurement-related information and/or each candidate data processing policy; where the target data processing policy is used to indicate a preprocessing policy for the measurement-related information or a preprocessing policy for the input data of the target AI model — 202

FIG. 2

## Description

## CROSS-REFERENCE TO RELATED APPLICATIONS

This application claims priority to Chinese Patent Application No.202210126490.4, filed with the China National Intellectual Property Administration on Feb. 10, 2022 and entitled "INFORMATION PROCESSING METHOD AND COMMUNICATION DEVICE", which is incorporated herein by reference in its entirety.

## TECHNICAL FIELD

This application pertains to the field of communication technologies and specifically relates to an information processing method and a communication device.

## BACKGROUND

Positioning methods based on a communication network include a communication device measuring reference signals to estimate the current geographical location of a target terminal. The positioning methods based on a communication network mainly depend on the measurement results of line-of-sight paths for positioning. When a line-of-sight (line-of-sight, LOS) path exists, a high positioning accuracy can be implemented with low implementation complexity. However, the positioning methods based on a communication network are susceptible to the influence of non-line-of-sight (NLOS) paths. Especially when no line-of-sight path exists between the terminal and the positioning base station, the positioning accuracy decreases greatly. In addition, the positioning methods based on a communication network are vulnerable to the effects of synchronization and group delay. As synchronization and group delay errors increase, positioning accuracy decreases significantly.

Positioning methods based on artificial intelligence (Artificial Intelligence, AI) or machine learning (ML) can address the positioning issue arising under the existence of an NLOS path and synchronization degradation. However, the positioning methods in the related arts cause a large computational load and have a low prediction performance.

## SUMMARY

Embodiments of this application provide an information processing method and a communication device, able to solve the problem of a large computational load and a low prediction performance of the positioning method in the related art.

According to a first aspect, an information processing method is provided, where the method includes:

obtaining, by a communication device, first information related to configuration information of a target AI model, where the first information includes measurement-related information and/or at least one candidate data processing policy; and

determining, by the communication device, input data of the target AI model or a target data processing policy based on the measurement-related information and/or each candidate data processing policy; where

the target data processing policy is used to indicate a preprocessing policy for the measurement-related information or a preprocessing policy for the input data of the target AI model.

According to a second aspect, an information processing apparatus is provided, where the apparatus includes:

a first obtaining module, configured to obtain first information related to configuration information of a target AI model; where the first information includes measurement-related information and/or at least one candidate data processing policy; and

a determining module, configured to determine input data of the target AI model or a target data processing policy based on the measurement-related information and/or each candidate data processing policy; where the target data processing policy is used to indicate a preprocessing policy for the measurement-related information or a preprocessing policy for the input data of the target AI model.

According to a third aspect, a communication device is provided. The communication device includes a processor and a memory. The memory stores a program or instructions capable of running on the processor. When the program or instructions are executed by the processor, the method according to the first aspect is implemented.

According to a fourth aspect, a communication device is provided, including a processor and a communication interface; where the processor is configured to obtain first information related to configuration information of a target AI model, where the first information includes measurement-related information and/or at least one candidate data processing policy; and determine input data of the target AI model or a target data processing policy based on the measurement-related information and/or each candidate data processing policy; where the target data processing policy is used to indicate a preprocessing policy for the measurement-related information or a preprocessing policy for the input data of the target AI model.

According to a fifth aspect, a readable storage medium is provided. The readable storage medium stores a program or instructions, and when the program or instructions are executed by a processor, the method according to the first aspect is implemented.

According to a sixth aspect, a chip is provided.

The chip includes a processor and a communications interface. The communications interface is coupled to the processor, and the processor is configured to run a program or instructions to implement the method according to the first aspect.

According to a seventh aspect, a computer program/program product is provided. The computer program/program product is stored in a storage medium, and the computer program/program product is executed by at least one processor to implement the method according to the first aspect.

In the embodiments of this application, the communication device obtains the first information related to the configuration information of the target AI model, and then the communication device determines the input data of the target AI model or the target data processing policy based on the measurement-related information and/or at least one candidate data processing policy included in the first information. With the first information including measurement-related information and/or at least one candidate data processing policy, a large amount of redundant information is eliminated from the input data of the target AI model determined by the communication device based on the first information. The determined target data processing policy can be used to preprocess the measurement-related information to reduce redundant information, thereby reducing the computational load of the target AI model and improving the prediction performance of the target AI model.

## BRIEF DESCRIPTION OF DRAWINGS

FIG. 1 is a schematic diagram of a wireless communication system to which embodiments of this application may be applied;

FIG. 2 is a schematic flowchart of an information processing method according to an embodiment of this application;

FIG. 3 is a schematic structural diagram of an information processing apparatus according to an embodiment of this application;

FIG. 4 is a first schematic structural diagram of a communication device according to an embodiment of this application;

FIG. 5 is a second schematic structural diagram of a communication device according to an embodiment of this application; and

FIG. 6 is a third schematic structural diagram of a communication device according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to long term evolution (Long Term Evolution, LTE) or LTE-advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other communication systems than an NR system application, for example, the 6th generation (6th Generation, 6G) communication system.

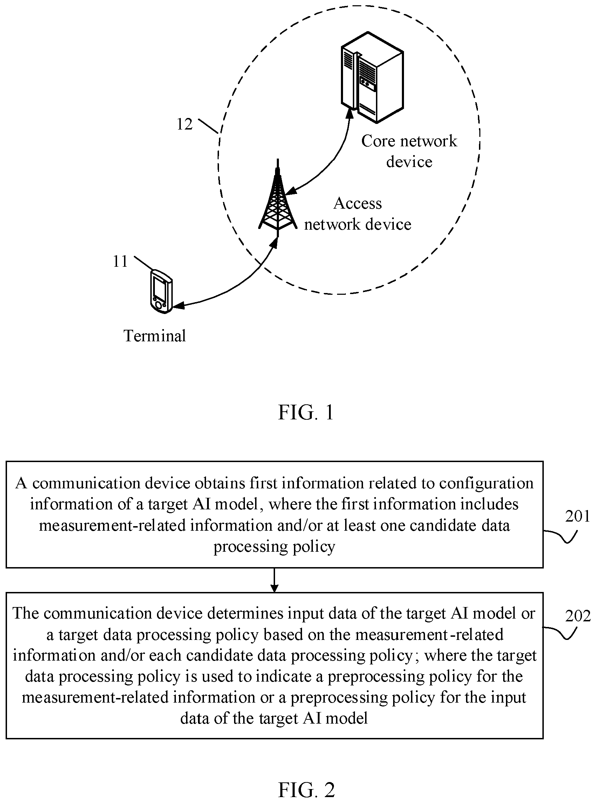

FIG. 1 is a schematic diagram of a wireless communication system to which embodiments of this application may be applied. The wireless communication system shown in FIG. 1 includes a terminal 11 and a network-side device 12.

The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the specific type of the terminal 11 is not limited in the embodiments of this application.

The network-side device 12 may include an access network device or a core network device. The access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example for description, although the specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, L-NEF), binding support function (Binding Support Function, BSF), application function (Application Function, AF), location manage function (location manage function, LMF), enhanced serving mobile location center (Enhanced Serving Mobile Location Centre, E-SMI,C), network data analytics function (network data analytics function, NWDAF), and the like. It should be noted that in the embodiments of this application, only the core network device in the NR system is introduced as an example, and the specific type of the core network device is not limited.

The following describes in detail the information processing method provided in the embodiments of this application through some embodiments and application scenarios thereof with reference to the accompanying drawings.

FIG. 2 is a schematic flowchart of an information processing method according to an embodiment of this application. As shown in FIG. 2, the method includes step 201 and step 202:

Step 201: A communication device obtains first information related to configuration information of a target AI model, where the first information includes measurement-related information and/or at least one candidate data processing policy.

Step 202: The communication device determines input data of the target AI model or a target data processing policy based on the measurement-related information and/or each candidate data processing policy; where

the target data processing policy is used to indicate a preprocessing policy for the measurement-related information or a preprocessing policy for the input data of the target AI model.

It should be noted that this embodiment of this application may be applied to scenarios such as terminal positioning and channel state information (Channel State Information, CSI) estimation. Optionally, a target task performed by the target AI model may include tasks such as positioning and/or CSI estimation.

Taking the target task performed by the target AI model being a positioning task as an example. At this time, the first information includes: input data such as measurement-related information for AI positioning and/or at least one candidate data processing policy for AI positioning.

In practice, the communication device includes at least one of the following: a terminal; a network-side device; a location server; a monitoring device (Actor); an NWADF; and an LMF or evolved LMF device. For example, the terminal may include, but is not limited to, the types of terminal 11 listed above; the network-side device may include, but is not limited to, the types of network-side device 12 listed above; and the location server may include an E-SMLC, LMF, or evolved LMF device.

Optionally, the target AI model may be at least one AI network architecture obtained through deep learning or machine learning. The communication device may obtain the configuration information of the target AI model in advance. For example, the communication device determines the configuration information of the target AI model by itself; or, the communication device receives the configuration information of the target AI model transmitted by another device.

After obtaining the first information related to the configuration information of the target AI model, the communication device may determine at least one of the following based on the measurement-related information and/or each candidate data processing policy:

(a) input data of the target AI model; for example, the input data of the target AI model may include at least one of the input data format, input information, and measurement information of the target AI model;
(b) a preprocessing policy for the measurement-related information; for example, the preprocessing policy for the measurement-related information may include: a policy for indicating how characteristic extraction is performed, and/or a policy for indicating how measurement variable selection is performed; or
(c) a preprocessing policy for the input data of the target AI model.

Optionally, the communication device may receive update information of the configuration information of the target AI model and/or update information of the first information. Specifically, both the configuration information and the first information of the target AI model can be divided into variable parameters and fixed parameters; update information of the configuration information of the target AI model may be only for a variable parameter and model in the configuration information of the target AI model; and update information of the first information may be only for a variable parameter and model in the first information.

In the information processing method provided in embodiments of this application, the communication device obtains the first information related to the configuration information of the target AI model, and then the communication device determines the input data of the target AI model or the target data processing policy based on the measurement-related information and/or at least one candidate data processing policy included in the first information. With the first information including measurement-related information and/or at least one candidate data processing policy, a large amount of redundant information is eliminated from the input data of the target AI model determined by the communication device based on the first information. The determined target data processing policy can be used to preprocess the measurement-related information to reduce redundant information, thereby reducing the computational load of the target AI model and improving the prediction performance of the target AI model.

The configuration information of the target AI model provided in the embodiments of this application may include at least one of the following:

(1) model identifier ID information;
(2) model structure information; specifically, the model structure information may include at least one of the following:

(a) any one or a combination of a fully connected neural network, a convolutional neural network, a recurrent neural network, and a residual network;
(b) a number of hidden layers;
(c) a connection mode between an input layer and a hidden layer;
(d) a connection mode between a plurality of hidden layers;
(e) a connection mode between a hidden layer and an output layer; and
(f) a number of neurons in each layer.

(3) model type information; for example, the model type information may include at least one of the following: a fully connected model; a hybrid model; an unsupervised model; and a supervised model;
(4) model parameter information; specifically, the model parameter information includes at least one of the following:

(a) application documentation of a model;
(b) descriptive parameter information of a model; for example, the descriptive parameter information of the model may include an input format of a model parameter, and/or an output format of a model parameter;
(c) hyperparameter information of a model; for example, the hyperparameter information of the model may include at least one of the following: an activation model, a number of iterations, and a batch size (Batch size) used by the target AI model;
(d) initial parameter information of a model; for example, the initial parameter information of the model may include at least one of the following: an initial parameter for meta-learning; and an initial parameter for training;
(e) a weight of a model; for example, a weight of the model may include weights and biases of neurons of the neural network;

(5) model input information; where the model input information may include at least one of the following: an input data format of the model; a description of a data format; a data type of model input; and a data size;
(6) model output information; where the model output information may include at least one of the following: an output data format of the model; a description of a data format; and output data of the model;
(7) model inference process (AI inference); for example, the model inference process may be: a process of obtaining output information based on the configuration information of the target AI model and the measurement-related information used for AI positioning; and

(8) optimizer state information.

Optionally, the configuration information of the target AI model may also include: model usage indication; where the model usage indication may be used to indicate: (a) the communication device independently performs a target task based on the target AI model; or (b) the communication device assists in performing a part of a target task based on the target AI model.

For example, the communication device performs a first part or an entire target task based on the target AI model, obtains a first measurement result, and transmits the first measurement result to another communication device; the another communication device performs a second part or the entire target task, and obtains the second measurement result; then, the another communication device determines the predicted result of the target task based on the first measurement result and the second measurement result. It should be understood that the first part and the second part of the target task may be the same, overlapping, or completely different.

For another example, the communication device performs a part or an entire target task based on the target AI model, obtains a first measurement result, and transmits the first measurement result to another communication device; and the another communication device determines the predicted result of the target task based on the first measurement result.

Optionally, the configuration information of the target AI model provided in the embodiments of this application may include at least one of the following:

(1) list information of a neural network, where the list information includes at least one of the following: a neuron type of each neural network; and a neuron weight and/or bias of each neural network;

(2) a type and/or location of an activated network element;

(3) hyperparameter information; where the hyperparameter information may include at least one of the following: an activation model, the number of iterations, and a Batch size used by the target AI model; and

(4) loss function information.

Optionally, the input data of the target AI model may include at least one of the following:

(1) first channel impulse response (Channel Impulse Response, CIR) information, where a length of the first CIR information is N1, and N1 is a positive integer;

(2) a first CIR matrix, where the first CIR matrix has N2×N3 dimensions and a translation parameter M, where N2, N3, and M are all positive integers;

(3) path-related information of N4 paths, where N4 is a positive integer; and

(4) long term long term CIR information. For example, the long term long term information is the information obtained by smoothing K1 CIRs.

Optionally, the input data of the target AI model may further include at least one of the following: positioning signal measurement information of the terminal; location information of the terminal; error information; power of the first path; delay of the first path; time of arrival TOA of the first path; reference signal time difference RSTD of the first path; angle of arrival of the first path; antenna subcarrier phase difference of the first path; power of multiple paths; delay of multiple paths; TOA of multiple paths; RSTD of multiple paths; angle of arrival of multiple paths; antenna subcarrier phase difference of multiple paths; average excess delay; root mean square delay spread; coherence bandwidth; channel impulse responses of multiple antennas; the number of antennas; expected (Expected) AoA, expected AoD, LOS/NLOS indication information; and estimation error and measurement error.

The target data processing policy provided in the embodiments of this application may include at least one of the following:

(1) an AI model input format; for example, the AI model input format may include at least one of model input data format or format description, a length of CIR information, and a number of dimensions and/or a translation parameter of a CIR matrix;

(2) a CIR information truncation length;

Specifically, AI positioning based on a CIR has a high accuracy. However, if the terminal transmits a high-dimensional CIR matrix (for example 4096×18) to the core network, a large amount of feedback overhead will be occupied; furthermore, there is a large amount of redundant information in the CIR, such as a significant number of zero elements in the middle and tail of the CIR, not only increasing the overhead of CIR feedback but also increasing the difficulty of the AI model learning CIR characteristics. In the embodiments of this application, the CIR is truncated to infer the location, improving the prediction accuracy of the AI model.

(3) a number of rows and/or number of columns of a CIR matrix;

(4) CIR information translation;

Specifically, the CIR dimension expansion is to change an N1×1 CIR into an (N1-M1)×M2 CIR matrix. For example, a CIR Toeplitz matrix is a 4096×19 matrix, where columns 2 to 19 are obtained by shifting the first column of the CIR of the channel by one position to the right.

For CIR matrix $T = [t_{ij}] \in C^{m \times n}$; if $t_{ij} = t_{j-i}(i, j = 1, 2, ..., n)$,

then:

$$T = \begin{pmatrix} t_0 & t_1 & t_2 & \cdots & t_{n-1} \\ t_{-1} & t_0 & t_1 & \cdots & t_{n-2} \\ t_{-2} & t_{-1} & t_0 & \cdots & t_{n-3} \\ \cdots & \cdots & \cdots & \cdots & \cdots \\ t_{-n+1} & t_{-n+2} & t_{-n+3} & \cdots & t_0 \end{pmatrix}$$

(5) path-related information of N5 paths, where N5 is a positive integer;

(6) a normalization policy;

(7) a long term (Long term) smoothing method; where one embodiment may be measurement information corresponding to K (K>1) samples, or may be a smoothing result of measurement information of upper layer L3; and

(8) a short term (short term) smoothing method; where one embodiment may be measurement information corresponding to one sample or may be a smoothing result of measurement information at physical layer L1.

The candidate data processing policy provided in the embodiments of this application may include at least one of the following: path-related information; a characteristic of CIR information; a normalization policy; a long term indication; a short term indication; and CIR information averaged over L measurement results, where L is a positive integer.

It should be noted that the characteristic of CIR information includes at least one of the following: a CIR information truncation length; a number of rows of a CIR matrix; a number of columns of the CIR matrix; and a CIR translation parameter.

Optionally, the path-related information includes at least one of the following: a number of paths; path characteristic information; and a path selection criterion. Specifically, the path characteristic information may include at least one of the following: time information; energy information; and angle information.

For example, the time information may include at least one of the following: delay of multiple paths; time of arrival (time of arrival, TOA) of multiple paths; and reference signal time difference (Reference Signal Time Difference, RSTD) of multiple paths.

For example, the energy information may include at least one of the following: reference signal received power (Reference Signal Received Power, RSRP) of multiple paths.

For example, the angle information may include at least one of the following: an angle of arrival (Angle Of Arrival, AOA) measurement result and an angle of departure (Angle of Departure, AoD) measurement result.

The path selection criterion includes at least one of the following: (1) a path with energy greater than a first threshold among multiple paths, where the first threshold is a product value of energy of a path with maximum energy and a first value; and (2) paths ranking in top N6 positions by energy in multiple paths, where N6 is a positive integer.

Optionally, the normalization policy includes at least one of the following: a time normalization policy; an energy normalization policy; indication information for indicating whether normalization is performed; and a normalization coefficient. Details are described as follows:

1. The energy normalization policy may include at least one of the following:

(1) normalization processing is performed based on a maximum value among a plurality of CIRs received by a terminal; for example, the plurality of CIRs may include CIRs from a plurality of base stations and/or CIRs from a plurality of measurements;

(2) normalization processing is performed based on a maximum value among measurement information of a plurality of TRPs or base stations received by a terminal;

(3) normalization processing is performed based on a maximum value among one CIR received by a terminal;

(4) normalization processing is performed based on a maximum value among measurement information of one TRP or base station received by a terminal;

(5) normalization processing is performed based on a maximum path received by a terminal; and

(6) amplification processing is performed based on a CIR received by a terminal; for example, amplifying the CIR received by the terminal to N times, or amplifying the CIR received by the terminal to a maximum value K.

2. The time normalization policy may include at least one of the following:

(1) a CIR of a maximum path in relation to a plurality of TRPs or base stations;

(2) a CIR corresponding to a time of arrival TOA in relation to a reference TRP or base station;

(3) a CIR corresponding to an RSTD in relation to a reference TRP or base station; for example, transforming the CIR of base station a into an RSTD-related CIR, which means shifting a CIR pattern to the right by the TOA of the reference base station;

(4) a CIR corresponding to a round-trip time (round-trip time, RTT) in relation to a sounding reference signal (Sounding Reference Signal, SRS); and

(5) a CIR corresponding to a reception to transmission Rx-Tx measurement in relation to a terminal and a TRP or base station; for example, the CIR pattern is shifted to the right by a TS unit of time corresponding to Tx.

3. The time normalization policy may include at least one of the following:

(1) a measured CIR of another TRP or base station is translated based on a time corresponding to a maximum path in relation to a reference TRP or base station;
(2) a measured CIR is translated based on a time of arrival TOA in relation to a reference TRP or base station;
(3) a measured CIR is translated based on an RSTD in relation to a reference TRP or base station;
(4) a measured CIR is translated based on Rx-Tx in relation to a reference TRP or base station;
(5) a measured CIR is translated based on a TOA in relation to an SRS transmission time; and
(6) a measured CIR is translated based on an Rx-Tx in relation to a terminal and a TRP or base station; for example, the CIR pattern is shifted to the right by a TS unit of time corresponding to Tx.

It should be noted that the measured CIR may be a CIR from a reference cell or a neighboring cell; the measured CIR may be a single-antenna or multi-antenna CIR; and optionally, the CIR includes at least one of the following:

a time domain channel impulse response;
a time domain cross-correlation vector or matrix;
a time domain auto-correlation vector or matrix;
a frequency domain channel response;
a frequency domain cross-correlation vector or matrix;
a frequency domain auto-correlation vector or matrix;
a frequency domain subcarrier phase vector or matrix; and
a frequency domain subcarrier phase difference vector or matrix.

Optionally, the measurement-related information includes at least one of the following: signal measurement information; location information; an error value; CIR information; and power delay profile PDP information. Details are described as follows:

(1) The signal measurement information may include at least one of the following: an RSTD measurement result; an RTT measurement result; an AOA measurement result; an AOD measurement result; RSRP; measurement information of multiple paths; and LOS indication information. Specifically, the measurement information of the multiple paths may include at least one of the following: power of the first path/multiple paths; delay of the first path/multiple paths; TOA of the first path/multiple paths; RSTD of the first path/multiple paths; antenna subcarrier phase difference of the first path/multiple paths; and antenna subcarrier phase of the first path/multiple paths.
(2) The location information may include at least one of the following: absolute location information (such as latitude and longitude information); and relative location information.
(3) The error value may include at least one of the following: a location error value; and a measurement error value.
(4) The CIR information may include at least one of the following: time domain or frequency domain CIR information; and processing information (such as truncation information) of the time domain or frequency domain CIR information.
(5) The CIR information may include at least one of the following: CIR information of a single antenna; and CIR information of multiple antennas.

Optionally, the implementation of the communication device obtaining the measurement-related information may include: the communication device obtaining the measurement-related information based on a target mode or a target device; where
the target mode includes at least one of the following: observed time difference of arrival (Observed Time Difference of Arrival, OTDOA); global navigation satellite system (Global Navigation Satellite System, GNSS); downlink time difference of arrival TDOA; uplink time difference of arrival TDOA; bluetooth AoA; bluetooth AoD; and RTT.
In practice, the target device may include at least one of the following: bluetooth; a sensor; and wireless high-fidelity WiFi.
The information processing method provided in the embodiments of this application may be executed by an information processing apparatus. The embodiments of this application use the information processing apparatus performing the information processing method as an example to describe the information processing apparatus provided in the embodiments of this application.

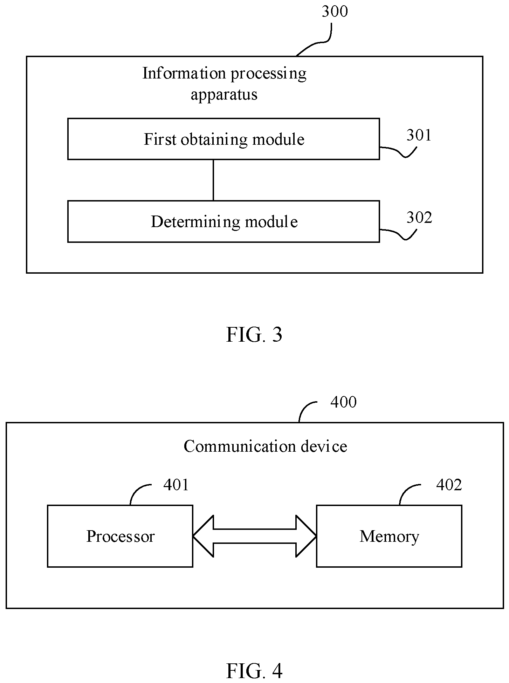

FIG. 3 is a schematic structural diagram of an information processing apparatus according to an embodiment of this application. As shown in FIG. 3, the information processing apparatus 300 may be applied to a communication device and the information processing apparatus 300 includes:

a first obtaining module 301, configured to obtain first information related to configuration information of a target AI model; where the first information includes measurement-related information and/or at least one candidate data processing policy; and

a determining module 302, configured to determine input data of the target AI model or a target data processing policy based on the measurement-related information and/or each candidate data processing policy; where the target data processing policy is used to indicate a preprocessing policy for the measurement-related information or a preprocessing policy for the input data of the target AI model.

In the information processing apparatus provided in embodiments of this application, through obtaining the first information related to the configuration information of the target AI model, the communication device determines the input data of the target AI model or the target data processing policy based on the measurement-related information and/or at least one candidate data processing policy included in the first information. With the first information including measurement-related information and/or at least one candidate data processing policy, a large amount of redundant information is eliminated from the input data of the target AI model determined by the communication device based on the first information. The determined target data processing policy can be used to preprocess the measurement-related information to reduce redundant information, thereby reducing the computational load of the target AI model and improving the prediction performance of the target AI model.

Optionally, the information processing apparatus 300 further includes:

a second obtaining module, configured for the communication device to obtain the configuration information of the target AI model.

Optionally, the configuration information of the target AI model includes at least one of the following: model identifier ID information; model structure information; model type information; model parameter information; model input information; model output information; model inference process; and optimizer state information.

Optionally, the input data of the target AI model includes at least one of the following:

first channel impulse response CIR information, where a length of the first CIR information is N1, and N1 is a positive integer;
a first CIR matrix, where the first CIR matrix has N2×N3 dimensions and a translation parameter M, where N2, N3, and M are all positive integers;
path-related information of N4 paths, where N4 is a positive integer; and
long term long term CIR information.

Optionally, the target data processing policy includes at least one of the following:

an AI model input format;
a CIR information truncation length;
a number of rows and/or number of columns of a CIR matrix;
CIR information translation;
path-related information of N5 paths, where N5 is a positive integer;
a normalization policy;
a long term long term smoothing method; and
a short term short term smoothing method.

Optionally, the candidate data processing policy includes at least one of the following: path-related information; a characteristic of CIR information; a normalization policy; a long term indication; a short term indication; and CIR information averaged over L measurement results, where L is a positive integer.

Optionally, the path-related information includes at least one of the following: a number of paths; path characteristic information; and a path selection criterion.

Optionally, the path characteristic information includes at least one of the following: time information; energy information; and angle information.

Optionally, the path selection criterion includes at least one of the following: a path with energy greater than a first threshold among multiple paths, where the first threshold is a product value of energy of a path with maximum energy and a first value; and paths ranking in top N6 positions by energy in multiple paths, where N6 is a positive integer.

Optionally, the characteristic of CIR information includes at least one of the following:

A CIR information truncation length; a number of rows of a CIR matrix; a number of columns of a CIR matrix; and a CIR translation parameter.

Optionally, the normalization policy includes at least one of the following: a time normalization policy; an energy normalization policy; indication information for indicating whether normalization is performed; and a normalization coefficient.

Optionally, the energy normalization policy includes at least one of the following:

normalization processing is performed based on a maximum value among a plurality of CIRs received by a terminal;
normalization processing is performed based on a maximum value among measurement information of a plurality of transmitting receiving points TRPs or base stations received by a terminal;
normalization processing is performed based on a maximum value among one CIR received by a terminal;
normalization processing is performed based on a maximum value among measurement information of one TRP or base station received by a terminal;
normalization processing is performed based on a maximum path received by a terminal; and amplification processing is performed based on a CIR received by a terminal.

Optionally, the time normalization policy includes at least one of the following:

a CIR of a maximum path in relation to a plurality of TRPs or base stations;
a CIR corresponding to a time of arrival TOA in relation to a reference TRP or base station;
a CIR corresponding to a reference signal time difference RSTD in relation to a reference TRP or base station;
a CIR corresponding to a round-trip time RTT in relation to a sounding reference signal SRS; and
a CIR corresponding to a reception to transmission Rx-Tx measurement in relation to a terminal and a TRP or base station.

Optionally, the time normalization policy includes at least one of the following:

a measured CIR of another TRP or base station is translated based on a time corresponding to a maximum path in relation to a reference TRP or base station;
a measured CIR is translated based on a time of arrival TOA in relation to a reference TRP or base station;
a measured CIR is translated based on an RSTD in relation to a reference TRP or base station;
a measured CIR is translated based on Rx-Tx in relation to a reference TRP or base station;
a measured CIR is translated based on a TOA in relation to a sounding reference signal SRS transmission time; and
a measured CIR is translated based on reception-to-transmission Rx-Tx in relation to a terminal and a TRP or base station.

Optionally, the measurement-related information includes at least one of the following: signal measurement information; location information; an error value; CIR information; and power delay profile PDP information.

Optionally, the signal measurement information includes at least one of the following: a reference signal time difference RSTD measurement result; a round-trip time RTT measurement result; an angle of arrival AOA measurement result; an angle of departure AOD measurement result; reference signal received power RSRP; measurement information of multiple paths; and line-of-sight LOS indication information.

Optionally, the first obtaining module 301 is specifically configured to obtain the measurement-related information based on a target mode or a target device; the target mode includes at least one of the following: observed time difference of arrival OTDOA; global navigation satellite system GNSS; downlink time difference of arrival TDOA; uplink time difference of arrival TDOA; bluetooth AoA; bluetooth AoD; and RTT; and the target device includes at least one of the following: bluetooth; a sensor; and wireless high-fidelity WiFi.

Optionally, the model structure information includes at least one of the following:

any one or a combination of a fully connected neural network, a convolutional neural network, a recurrent neural network, and a residual network;
the number of hidden layers;
a connection mode between an input layer and a hidden layer;
a connection mode between a plurality of hidden layers;
a connection mode between a hidden layer and an output layer; and
a number of neurons in each layer.

Optionally, the model type information includes at least one of the following:
a fully connected model; a hybrid model; an unsupervised model; and a supervised model.

Optionally, the model parameter information includes at least one of the following:

application documentation of a model;
descriptive parameter information of a model;
hyperparameter information of a model;
initial parameter information of a model; and
a weight of a model.

Optionally, the configuration information of the target AI model includes at least one of the following:

list information of a neural network, where the list information includes at least one of the following: a neuron type of each neural network; and a neuron weight and/or bias of each neural network;
a type and/or location of an activated network element;
hyperparameter information; and
loss function information.

Optionally, the information processing apparatus 300 further includes:
a receiving module, configured to receive update information of the configuration information of the target AI model and/or update information of the first information.

Optionally, the communication device includes at least one of the following:

a terminal;
a network-side device;
a location server;
a monitoring device Actor;

a network data analytics function NWADF; and

a location management function LMF or evolved LMF device.

The information processing apparatus in the embodiments of this application may be a communication device, for example a communication device having an operating system, or may be a component of a communication device, for example, an integrated circuit or a chip. The operating system may be an android (Android) operating system, an iOS operating system, or another possible operating system. This is not specifically limited in an embodiment of this application. The communication device may include at least one of the following: a terminal; a network-side device; a location server; a monitoring device (Actor); and an NWADF; and an LMF or evolved LMF device. For example, the terminal may include, but is not limited to, the types of the terminal 11 listed above; the network-side device may include, but is not limited to, the types of the network-side device 12 listed above; and the location server may include an E-SMLC, LMF, or evolved LMF device.

The information processing apparatus provided in this embodiment of this application is capable of implementing the processes implemented in the above information processing method embodiment, with the same technical effects achieved. To avoid repetition, details are not described herein again.

FIG. 4 is a first schematic structural diagram of a communication device according to an embodiment of this application. As shown in FIG. 4, the communication device 400 includes a processor 401 and a memory 402. The memory 402 stores a program or instructions capable of running on the processor 401. When the program or the instructions are executed by the processor 401, the steps of the foregoing embodiment of the information processing method are implemented, with the same technical effects achieved. To avoid repetition, details are not described herein again.

An embodiment of this application further provides a communication device, including a processor and a communication interface; where the processor is configured to obtain first information related to configuration information of a target AI model, where the first information includes measurement-related information and/or at least one candidate data processing policy; and determine input data of the target AI model or a target data processing policy based on the measurement-related information and/or each candidate data processing policy; where the target data processing policy is used to indicate a preprocessing policy for the measurement-related information or a preprocessing policy for the input data of the target AI model.

This communication device embodiment corresponds to the foregoing communication device side method embodiment. All processes and implementations in the foregoing method embodiment can be applicable to this communication device embodiment, with the same technical effect achieved.

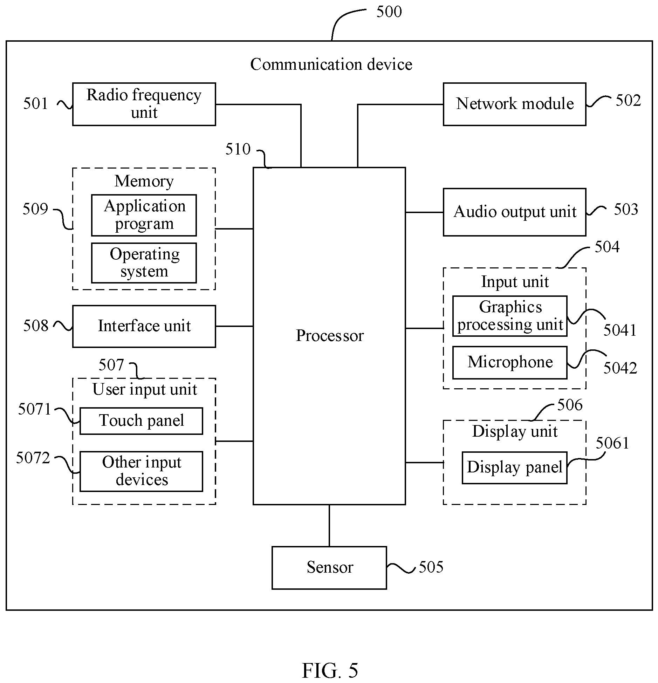

Optionally, the communication device may include a terminal. FIG. 5 is a second schematic structural diagram of a communication device provided in an embodiment of this application. As shown in FIG. 5, the communication device 500 includes but is not limited to at least a part of components such as a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the communication device 500 may further include a power supply (such as a battery) for supplying power to the components. The power supply may be logically connected to the processor 510 through a power management system. In this way, functions such as charge management, discharge management, and power consumption management are implemented by using the power management system. The structure of the communication device shown in FIG. 5 does not constitute a limitation on the communication device. The communication device may include more or fewer components than those shown in the figure, or a combination of some components, or components disposed differently. Details are not described herein again.

It should be understood that in an embodiment of this application, the input unit 504 may include a graphics processing unit (Graphics Processing Unit, GPU) 5041 and a microphone 5042. The graphics processing unit 5041 processes image data of a static picture or video obtained by an image capture apparatus (such as a camera) in an image capture or video capture mode. The display unit 506 may include a display panel 5061. The display panel 5061 may be configured in a form of a liquid crystal display, an organic light-emitting diode display, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. Specifically, the other input devices 5072 may include but are not limited to a physical keyboard, a function button (for example, volume control button or on/off button), a trackball, a mouse, and a joystick. Details are not described herein.

In an embodiment of this application, the radio frequency unit 501 receives downlink data from a network-side device and transfers the data to the processor 510 for processing; and the radio frequency unit 501 can additionally send uplink data to the network-side device. Generally, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may include a first storage for storing programs or instructions and a second storage area for storing data. The first storage area may store an operating system, an application program or instructions required by at least one function (for example, a sound playback function or an image playback function), and the like. Additionally, the memory 509 may be a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 509 in the embodiments of this application includes but is not limited to these or any other applicable types of memories.

The processor 510 may include one or more processing units. Optionally, the processor 510 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 510.

The processor 510 is configured to obtain first information related to configuration information of a target AI model, where the first information includes measurement-related information and/or at least one candidate data processing policy; and determine input data of the target AI model or a target data processing policy based on the measurement-related information and/or each candidate data processing policy; where the target data processing policy is used to indicate a preprocessing policy for the measurement-related information or a preprocessing policy for the input data of the target AI model.

Through obtaining the first information related to the configuration information of the target AI model, the communication device provided in embodiments of this application determines the input data of the target AI model or the target data processing policy based on the measurement-related information and/or at least one candidate data processing policy included in the first information. With the first information including measurement-related information and/or at least one candidate data processing policy, a large amount of redundant information is eliminated from the input data of the target AI model determined by the communication device based on the first information. The determined target data processing policy can be used to preprocess the measurement-related information to reduce redundant information, thereby reducing the computational load of the target AI model and improving the prediction performance of the target AI model.

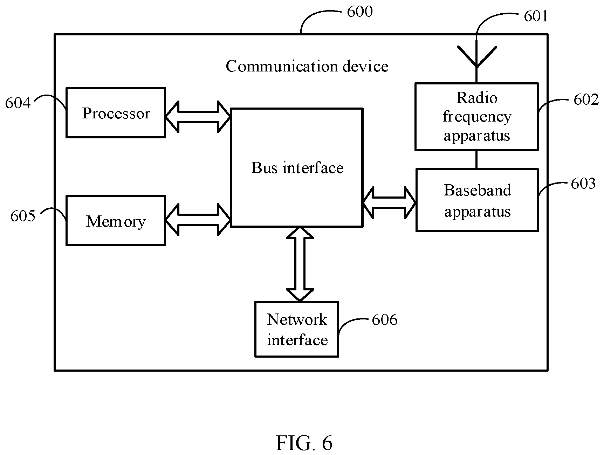

Optionally, the communication device may include a network-side device. FIG. 6 is a third schematic structural diagram of a communication device according to an embodiment of this application. As shown in FIG. 6, the communication device 600 includes an antenna 601, a radio frequency apparatus 602, a baseband apparatus 603, a processor 604, and memory 605. The antenna 601 is connected to the radio frequency apparatus 602. In an uplink direction, the radio frequency apparatus 602 receives information through the antenna 601, and sends the received information to the baseband apparatus 603 for processing. In a downlink direction, the baseband apparatus 603 processes to-be-sent information, and sends the information to the radio frequency apparatus 602; and the radio frequency apparatus 602 processes the received information and then sends the information out through the antenna 601.

The method executed by the communication device in the foregoing embodiments may be implemented on the baseband apparatus 603. The baseband apparatus 603 includes a baseband processor.

The baseband apparatus 603 may include, for example, at least one baseband processing unit, where a plurality of chips are disposed on the baseband processing unit. As shown in FIG. 6, one of the chips is, for example, a baseband processor, and connected to the memory 605 through a bus interface, to invoke the program in the memory 605 to perform the operations of the network device shown in the foregoing method embodiment.

The communication device may further include a network interface 606, where the interface is, for example, a common public radio interface (Common Public Radio Interface, CPRI).

Specifically, the communication device 600 in this embodiment of this application further includes instructions or a program stored in the memory 605 and capable of running on the processor 604. The processor 604 invokes the instructions or program in the memory 605 to perform the steps of the foregoing information processing method, with the same technical effects achieved. To avoid repetition, details are not described herein.

An embodiment of this application further provides a readable storage medium, where the readable storage medium may be volatile or non-volatile. The readable storage medium stores a program or instructions, and when the program or instructions are executed by a processor, the processes of the foregoing embodiments of the information processing method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

Another embodiment of this application provides a chip. The chip includes a processor and a communication interface. The communication interface is coupled to the processor. The processor is configured to run a program or instructions to implement the processes of the foregoing information processing method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing information processing method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the method and apparatus in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information processing method, comprising:

   obtaining, by a communication device, first information related to configuration information of a target AI model, wherein the first information comprises measurement-related information and/or at least one candidate data processing policy; and
   
   determining, by the communication device, input data of the target AI model or a target data processing policy based on the measurement-related information and/or each candidate data processing policy; wherein
   
   the target data processing policy is used to indicate a preprocessing policy for the measurement-related information or a preprocessing policy for the input data of the target AI model.

2. The information processing method according to claim 1, wherein the method further comprises:
   obtaining, by the communication device, the configuration information of the target AI model.

3. The information processing method according to claim 1 or 2, wherein the configuration information of the target AI model comprises at least one of the following:
   model identifier ID information; model structure information; model type information; model parameter information; model input information; model output information; model inference process; and optimizer state information.

4. The information processing method according to any one of claims 1 to 3, wherein the input data of the target AI model comprises at least one of the following:

first channel impulse response CIR information, wherein a length of the first CIR information is N1, and N1 is a positive integer;
a first CIR matrix, wherein the first CIR matrix has N2×N3 dimensions and a translation parameter M, and N2, N3, and M are all positive integers;
path-related information of N4 paths, wherein N4 is a positive integer; and
long term CIR information.

5. The information processing method according to any one of claims 1 to 3, wherein the target data processing policy comprises at least one of the following:

an AI model input format;
a CIR information truncation length;
a number of rows and/or number of columns of a CIR matrix;
CIR information translation;
path-related information of N5 paths, wherein N5 is a positive integer;
a normalization policy;
a long term smoothing method; and
a short term smoothing method.

6. The information processing method according to any one of claims 1 to 3, wherein the candidate data processing policy comprises at least one of the following:
path-related information; a characteristic of CIR information; a normalization policy; a long term indication; a short term indication; and CIR information averaged over L measurement results, wherein L is a positive integer.

7. The information processing method according to any one of claims 4 to 6, wherein the path-related information comprises at least one of the following:
a number of paths; path characteristic information; and a path selection criterion.

8. The information processing method according to claim 7, wherein the path characteristic information comprises at least one of the following:
time information; energy information; and angle information.

9. The information processing method according to claim 7, wherein the path selection criterion comprises at least one of the following:

a path with energy greater than a first threshold among multiple paths, wherein the first threshold is a product value of energy of a path with maximum energy and a first value; and
paths ranking in top N6 positions by energy in multiple paths, wherein N6 is a positive integer.

10. The information processing method according to claim 6, wherein the characteristic of CIR information comprises at least one of the following:
a CIR information truncation length; a number of rows of a CIR matrix; a number of columns of a CIR matrix; and a CIR translation parameter.

11. The information processing method according to claim 5 or 6, wherein the normalization policy comprises at least one of the following:
a time normalization policy; an energy normalization policy; indication information for indicating whether normalization is performed; and a normalization coefficient.

12. The information processing method according to claim 11, wherein the energy normalization policy comprises at least one of the following:

normalization processing is performed based on a maximum value among a plurality of CIRs received by a terminal;
normalization processing is performed based on a maximum value among measurement information of a plurality of transmitting receiving points TRPs or base stations received by a terminal;
normalization processing is performed based on a maximum value among one CIR received by a terminal;
normalization processing is performed based on a maximum value among measurement information of one TRP or base station received by a terminal;
normalization processing is performed based on a maximum path received by a terminal; and
amplification processing is performed based on a CIR received by a terminal.

13. The information processing method according to claim 11, wherein the time normalization policy comprises at least one of the following:

a CIR of a maximum path in relation to a plurality of TRPs or base stations;
a CIR corresponding to a time of arrival TOA in relation to a reference TRP or base station;
a CIR corresponding to a reference signal time difference RSTD in relation to a reference TRP or base station;
a CIR corresponding to a round-trip time RTT in relation to a sounding reference signal SRS; and

a CIR corresponding to a reception-to-transmission Rx-Tx measurement in relation to a terminal and a TRP or base station.

14. The information processing method according to claim 11, wherein the time normalization policy comprises at least one of the following:

a measured CIR of another TRP or base station is translated based on a time corresponding to a maximum path in relation to a reference TRP or base station;
a measured CIR is translated based on a time of arrival TOA in relation to a reference TRP or base station;
a measured CIR is translated based on an RSTD in relation to a reference TRP or base station;
a measured CIR is translated based on Rx-Tx in relation to a reference TRP or base station;
a measured CIR is translated based on a TOA in relation to a sounding reference signal SRS transmission time; and
a measured CIR is translated based on reception-to-transmission Rx-Tx in relation to a terminal and a TRP or base station.

15. The information processing method according to any one of claims 1 to 14, wherein the measurement-related information comprises at least one of the following:
signal measurement information; location information; an error value; CIR information; and power delay profile PDP information.

16. The information processing method according to claim 15, wherein the signal measurement information comprises at least one of the following:
a reference signal time difference RSTD measurement result; a round-trip time RTT measurement result; an angle of arrival AOA measurement result; an angle of departure AOD measurement result; reference signal received power RSRP; measurement information of multiple paths; and line-of-sight LOS indication information.

17. The information processing method according to any one of claims 4 to 16, wherein the CIR comprises at least one of the following:

a time domain channel impulse response;
a time domain cross-correlation vector or matrix;
a time domain auto-correlation vector or matrix;
a frequency domain channel response;
a frequency domain cross-correlation vector or matrix;
a frequency domain auto-correlation vector or matrix;

a frequency domain subcarrier phase vector or matrix; and
a frequency domain subcarrier phase difference vector or matrix.

18. The information processing method according to any one of claims 1 to 17, wherein the communication device obtaining the measurement-related information comprises:

obtaining, by the communication device, the measurement-related information based on a target mode or a target device; wherein
the target mode comprises at least one of the following: observed time difference of arrival OTDOA; global navigation satellite system GNSS; downlink time difference of arrival TDOA; uplink time difference of arrival TDOA; bluetooth AoA; bluetooth AoD; and RTT; and
the target device comprises at least one of the following: bluetooth; a sensor; and wireless high-fidelity WiFi.

19. The information processing method according to claim 3, wherein the model structure information comprises at least one of the following:

any one or a combination of a fully connected neural network, a convolutional neural network, a recurrent neural network, and a residual network;
a number of hidden layers;
a connection mode between an input layer and a hidden layer;
a connection mode between a plurality of hidden layers;
a connection mode between a hidden layer and an output layer; and
a number of neurons in each layer.

20. The information processing method according to claim 3, wherein the model type information comprises at least one of the following:
a fully connected model; a hybrid model; an unsupervised model; and a supervised model.

21. The information processing method according to claim 3, wherein the model parameter information comprises at least one of the following:

application documentation of a model;
descriptive parameter information of a model;
hyperparameter information of a model;
initial parameter information of a model; and
a weight of a model.

22. The information processing method according to claim 1 or 2, wherein the configuration information of the target AI model comprises at least one of the following:

list information of a neural network, wherein the list information comprises at least one of the following: a neuron type of each neural network; and a neuron weight and/or bias of each neural network;
a type and/or location of an activated network element;
hyperparameter information; and
loss function information.

23. The information processing method according to any one of claims 1 to 22, wherein the method further comprises:
receiving, by the communication device, update information of the configuration information of the target AI model and/or update information of the first information.

24. The information processing method according to any one of claims 1 to 23, wherein the communication device comprises at least one of the following:

a terminal;
a network-side device;
a location server;
a monitoring device Actor;
a network data analytics function NWADF; and
a location management function LMF or evolved LMF device.

25. An information processing apparatus, comprising:

a first obtaining module, configured to obtain first information related to configuration information of a target AI model; wherein the first information comprises measurement-related information and/or at least one candidate data processing policy; and
a determining module, configured to determine input data of the target AI model or a target data processing policy based on the measurement-related information and/or each candidate data processing policy; wherein the target data processing policy is used to indicate a preprocessing policy for the measurement-related information or a preprocessing policy for the input data of the target AI model.

26. A communication device, comprising a processor and a memory, wherein the memory stores a program or instructions executable on the processor, and when the program or instructions are executed by the processor, the information processing method according to any one of claims 1 to 24 is implemented.

27. A readable storage medium, wherein the readable storage medium stores a program or instructions, and when the program or instructions are executed by a processor, the information processing method according to any one of claims 1 to 24 is implemented.

FIG. 1

A communication device obtains first information related to configuration information of a target AI model, where the first information includes measurement-related information and/or at least one candidate data processing policy

201

The communication device determines input data of the target AI model or a target data processing policy based on the measurement-related information and/or each candidate data processing policy; where the target data processing policy is used to indicate a preprocessing policy for the measurement-related information or a preprocessing policy for the input data of the target AI model

202

FIG. 2

300

Information processing
apparatus

First obtaining module                301

Determining module                  302

FIG. 3

400

Communication device

401                                    402

Processor                Memory

FIG. 4

FIG. 5

FIG. 6

## INTERNATIONAL SEARCH REPORT

| | International application No. |
|---|---|
| | **PCT/CN2023/075442** |

**A. CLASSIFICATION OF SUBJECT MATTER**

H04W64/00(2009.01)i

According to International Patent Classification (IPC) or to both national classification and IPC

**B. FIELDS SEARCHED**

Minimum documentation searched (classification system followed by classification symbols)

IPC: H04W; H04Q7/-; H04M; H04L; H04B

Documentation searched other than minimum documentation to the extent that such documents are included in the fields searched

Electronic data base consulted during the international search (name of data base and, where practicable, search terms used)

CNTXT, CNABS, CNKI, WPABS, VEN, USTXT, WOTXT, EPTXT, 3GPP: 人工智能, 机器学习, 神经网络, 模型, 定位, 位置, 信道状态信息, 估计, 测量, 信道冲击响应, 误差, 功率时延谱, 输入, 预处理, 截断, 平移, 归一化, 平滑, 策略, 减少, 降低, 冗余, 计算量, artificial intelligence, machine learning, AI, ML, model, position+, locat+, channel state information, CSI, estimat+, CIR, PDP, input, process+, reduc+, redundancy, computational effort

**C. DOCUMENTS CONSIDERED TO BE RELEVANT**

| Category* | Citation of document, with indication, where appropriate, of the relevant passages | Relevant to claim No. |
|---|---|---|
| A | CN 113543305 A (VIVO COMMUNICATION TECHNOLOGY CO., LTD.) 22 October 2021 (2021-10-22) <br> description, paragraphs [0032]-[0243], and figures 1-6 | 1-27 |
| A | CN 111738419 A (BEIJING BAIDU NETCOM SCIENCE AND TECHNOLOGY CO., LTD.) 02 October 2020 (2020-10-02) <br> entire document | 1-27 |
| A | CN 110636466 A (SUPERMICRO (BEIJING) TECHNOLOGY CO., LTD.) 31 December 2019 (2019-12-31) <br> entire document | 1-27 |
| A | CN 111357014 A (HUAWEI TECHNOLOGIES CO., LTD.) 30 June 2020 (2020-06-30) <br> entire document | 1-27 |
| A | CN 112152948 A (HUAWEI TECHNOLOGIES CO., LTD.) 29 December 2020 (2020-12-29) <br> entire document | 1-27 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 May 2023** | **23 May 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/075442** |

**C.    DOCUMENTS CONSIDERED TO BE RELEVANT**

| Category* | Citation of document, with indication, where appropriate, of the relevant passages | Relevant to claim No. |
|---|---|---|
| A | CN 112533149 A (GUILIN UNIVERSITY OF TECHNOLOGY) 19 March 2021 (2021-03-19) <br> entire document | 1-27 |
| A | WO 2021035492 A1 (GUANGDONG OPPO MOBILE TELECOMMUNICATIONS CORP., LTD.) 04 March 2021 (2021-03-04) <br> entire document | 1-27 |

Form PCT/ISA/210 (second sheet) (July 2022)

## INTERNATIONAL SEARCH REPORT
### Information on patent family members

International application No.

**PCT/CN2023/075442**

| Patent document cited in search report | | | Publication date (day/month/year) | Patent family member(s) | | | Publication date (day/month/year) |
|---|---|---|---|---|---|---|---|
| CN | 113543305 | A | 22 October 2021 | None | | | |
| CN | 111738419 | A | 02 October 2020 | None | | | |
| CN | 110636466 | A | 31 December 2019 | None | | | |
| CN | 111357014 | A | 30 June 2020 | US | 2022036236 | A1 | 03 February 2022 |
| | | | | EP | 3836021 | A1 | 16 June 2021 |
| | | | | EP | 3836021 | A4 | 25 August 2021 |
| | | | | WO | 2020056647 | A1 | 26 March 2020 |
| CN | 112152948 | A | 29 December 2020 | None | | | |
| CN | 112533149 | A | 19 March 2021 | None | | | |
| WO | 2021035492 | A1 | 04 March 2021 | US | 2022123808 | A1 | 21 April 2022 |
| | | | | EP | 3979514 | A1 | 06 April 2022 |
| | | | | EP | 3979514 | A4 | 03 August 2022 |

Form PCT/ISA/210 (patent family annex) (July 2022)

**REFERENCES CITED IN THE DESCRIPTION**

**Patent documents cited in the description**

- CN 202210126490